# EUROPEAN PATENT APPLICATION

(11) **EP 4 679 901 A1**
(43) Date of publication of application: **14.01.2026**
(21) Application number: 24797236.7
(22) Date of filing: 11.01.2024
(51) Int. Cl.: H04W 56/00, H04W 4/80, H04W 76/14, H04W 4/06, H04W 8/00, H04W 88/02

(54) **ELECTRONIC DEVICE, METHOD, AND NON-TRANSITORY COMPUTER-READABLE STORAGE MEDIUM FOR SYNCHRONIZATION TO BROADCAST ISOCHRONOUS STREAM**

(30) Priority: 28.04.2023 KR 20230056666
(71) Applicant: Samsung Electronics Co., Ltd., Suwon-si, Gyeonggi-do 16677 (KR)
(72) Inventor: KIM, Sanghyeok, Suwon-si Gyeonggi-do 16677 (KR); JIN, Juyeon, Suwon-si Gyeonggi-do 16677 (KR); KIM, Taekyung, Suwon-si Gyeonggi-do 16677 (KR); AHN, Byeonghoon, Suwon-si Gyeonggi-do 16677 (KR); JANG, Wonkyoung, Suwon-si Gyeonggi-do 16677 (KR); JANG, Junho, Suwon-si Gyeonggi-do 16677 (KR); CHEONG, Gupil, Suwon-si Gyeonggi-do 16677 (KR)
(74) Representative: HGF
(86) International application number: PCT/KR2024/000573
(87) International publication number: WO 2024/225573

(57) **Abstract**

A first electronic device is provided. The first electronic device may comprise a communication circuit. The first electronic device may comprise a processor. The processor may be configured to identify a failure of synchronization to a broadcast isochronous stream (BIS) from a third electronic device during first periodic advertisement intervals of the third electronic device, which are indicated on the basis of first information for synchronization to the BIS. The processor may be configured to, on the basis of the identification, request, via the communication circuit, second information for synchronization to the BIS. The processor may be configured to synchronize to the BIS during second periodic advertisement intervals of the third electronic device, which are indicated on the basis of the second information received via the communication circuit from a second electronic device which has been paired with the first electronic device and synchronized to the BIS.

## Description

### [Technical Field]

The disclosure relates to an electronic device, a method, and a non-transitory computer-readable storage medium for synchronization to a broadcast isochronous stream (BIS).

### [Background Art]

Compared to legacy Bluetooth^{®} (or classical Bluetooth), Bluetooth^{®} low energy (BLE) may provide reduced power consumption and a communication range between connected devices that are at least a similar or often large. BLE may be provided on industrial, scientific, and medical (ISM) radio band.

The above-described information may be provided as a related art for the purpose of helping to understand the disclosure. No claim or determination is raised as to whether any of the above-described information may be applied as a related art related to the present disclosure.

### [Disclosure]

### [Technical Solution]

A first electronic device is provided. The first electronic device may include a communication circuit. The first electronic device may include a processor. The processor may be configured to identify failing to synchronize to a broadcast isochronous stream (BIS) from a third electronic device during first periodic advertisement intervals of the third electronic device indicated based on first information for synchronizing to the BIS. The processor may be configured to request, through the communication circuit, second information for synchronizing to the BIS, based on the identifying the failing to synchronize to the BIS. The processor may be configured to synchronize to the BIS during second periodic advertisement intervals of the third electronic device indicated based on the second information received through the communication circuit from a second electronic device that is paired with the first electronic device and is synchronized to the BIS.

A method is provided. The method may be executed in a first electronic device including a communication circuit. The method may comprise identifying failing to synchronize to a broadcast isochronous stream (BIS) from a third electronic device during first periodic advertisement intervals of the third electronic device indicated based on first information for synchronizing to the BIS. The method may comprise requesting, through the communication circuit, second information for synchronizing to the BIS, based on the the identifying the failing to synchronize to the BIS. The method may comprise synchronizing to the BIS during second periodic advertisement intervals of the third electronic device indicated based on the second information received through the communication circuit from a second electronic device that is paired with the first electronic device and is synchronized to the BIS.

A non-transitory computer-readable storage medium is provided. The non-transitory computer-readable storage medium may store one or more programs. The one or more programs may comprise instructions which, when executed by a processor of a first electronic device including a communication circuit, cause the first electronic device to identify failing to synchronize to a broadcast isochronous stream (BIS) from a third electronic device during first periodic advertisement intervals of the third electronic device indicated based on first information for synchronizing to the BIS. The one or more programs may comprise instructions which, when executed by the processor, cause the first electronic device to request, through the communication circuit, second information for synchronizing to the BIS, based on the identifying the failing to synchronize to the BIS. The one or more programs may comprise instructions which, when executed by the processor, cause the first electronic device to synchronize to the BIS during second periodic advertisement intervals of the third electronic device indicated based on the second information received through the communication circuit from a second electronic device that is paired with the first electronic device and is synchronized to the BIS.

A first electronic device is provided. The first electronic device may include a communication circuit. The first electronic device may include a processor. The processor may be configured to receive first information for synchronizing a broadcast isochronous stream (BIS) from a third electronic device, through the communication circuit from a second electronic device connected to the first electronic device. The processor may be configured to identify failing to synchronize to the BIS during first periodic advertisement intervals of the third electronic device indicated based on the first information. The processor may be configured to receive a first advertising packet advertised on a primary advertising channel from the third electronic device, based on the identifying the failing to synchronize to the BIS. The processor may be configured to receive a second advertising packet advertised on a secondary advertising channel from the third electronic device, based on the first advertising packet. The processor may be configured to obtain second information for synchronizing to the BIS, based on the second advertising packet. The processor may be configured to synchronize to the BIS during second periodic advertisement intervals of the third electronic device indicated based on the second information.

A method is provided. The method may be executed in a first electronic device including a communication circuit. The method may comprise receiving first information for synchronizing a broadcast isochronous stream (BIS) from a third electronic device, through the communication circuit from a second electronic device connected to the first electronic device. The method may comprise identifying failing to synchronize to the BIS during first periodic advertisement intervals of the third electronic device indicated based on the first information. The method may comprise receiving a first advertising packet advertised on a primary advertising channel from the third electronic device, based on the identifying the failing to synchronize to the BIS. The method may comprise receiving a second advertising packet advertised on a secondary advertising channel from the third electronic device, based on the first advertising packet. The method may comprise obtaining second information for synchronizing to the BIS, based on the second advertising packet. The method may comprise synchronizing to the BIS during second periodic advertisement intervals of the third electronic device indicated based on the second information.

A non-transitory computer-readable storage medium is provided. The non-transitory computer-readable storage medium may store one or more programs. The one or more programs may comprise instructions which, when executed by a processor of a first electronic device including a communication circuit, cause the first electronic device to receive first information for synchronizing a broadcast isochronous stream (BIS) from a third electronic device, through the communication circuit from a second electronic device connected to the first electronic device. The one or more programs may comprise instructions which, when executed by the processor, cause the first electronic device to identifying failing to synchronize to the BIS during first periodic advertisement intervals of the third electronic device indicated based on the first information. The one or more programs may comprise instructions which, when executed by the processor, cause the first electronic device to receive a first advertising packet advertised on a primary advertising channel from the third electronic device, based on the identifying the failing to synchronize to the BIS. The one or more programs may comprise instructions which, when executed by the processor, cause the first electronic device to receive a second advertising packet advertised on a secondary advertising channel from the third electronic device, based on the first advertising packet. The one or more programs may comprise instructions which, when executed by the processor, cause the first electronic device to obtain second information for synchronizing to the BIS, based on the second advertising packet. The one or more programs may comprise instructions which, when executed by the processor, cause the first electronic device to synchronize to the BIS during second periodic advertisement intervals of the third electronic device indicated based on the second information.

A first electronic device is provided. The first electronic device may include a communication circuit. The first electronic device may include a processor. The processor may be configured to identify failing to synchronize a broadcast isochronous stream (BIS) from a third electronic device during first periodic advertisement intervals of the third electronic device indicated by first information for synchronizing to the BIS. The processor may be configured to request, based on the identifying the failing to synchronize to the BIS, second information for synchronizing to the BIS to a second electronic device that transmitted the first information and is connected to the first electronic device through the communication circuit. The processor may be configured to synchronize to the BIS during second periodic advertisement intervals of the third electronic device indicated based on the second information received through the communication circuit in accordance with the request.

A method is provided. The method may be executed in a first electronic device including a communication circuit. The method may comprise identifying failing to synchronize a broadcast isochronous stream (BIS) from a third electronic device during first periodic advertisement intervals of the third electronic device indicated by first information for synchronizing to the BIS. The method may comprise requesting, based on the identifying the failing to synchronize to the BIS, second information for synchronizing to the BIS to a second electronic device that transmitted the first information and is connected to the first electronic device through the communication circuit. The method may comprise synchronize to the BIS during second periodic advertisement intervals of the third electronic device indicated based on the second information received through the communication circuit in accordance with the request.

A non-transitory computer-readable storage medium is provided. The non-transitory computer-readable storage medium may store one or more programs. The one or more programs may comprise instructions which, when executed by a processor of a first electronic device including a communication circuit, cause the first electronic device to identify failing to synchronize a broadcast isochronous stream (BIS) from a third electronic device during first periodic advertisement intervals of the third electronic device indicated by first information for synchronizing to the BIS. The one or more programs may comprise instructions which, when executed by the processor, cause the first electronic device to request, based on the identifying the failing to synchronize to the BIS, second information for synchronizing to the BIS to a second electronic device that transmitted the first information and is connected to the first electronic device through the communication circuit. The one or more programs may comprise instructions which, when executed by the processor, cause the first electronic device to synchronize to the BIS during second periodic advertisement intervals of the third electronic device indicated based on the second information received through the communication circuit in accordance with the request.

### [Description of the Drawings]

FIG. 1 illustrates an exemplary wireless environment including a first electronic device, a second electronic device, a third electronic device, and a fourth electronic device.
FIG. 2 is a simplified block diagram of an exemplary first electronic device.
FIG. 3 illustrates exemplary signaling in a wireless environment including a first electronic device that requests second information transmitted to a second electronic device based on a failure of synchronization to a broadcast isochronous stream (BIS) from a third electronic device.
FIG. 4 illustrates an example of a failure of synchronization to a BIS from a third electronic device executed during first periodic advertisement intervals.
FIGS. 5 and 6 illustrate an example of operations executed in a first electronic device before requesting second information to a second electronic device.
FIG. 7 illustrates exemplary signaling in a wireless environment including a first electronic device that receives a first advertising packet and a second advertising packet based on a failure of synchronization to a BIS from a third electronic device executed during first periodic advertisement intervals.
FIG. 8 illustrates an example of operations executed in a first electronic device before receiving a first advertising packet and a second advertising packet.
FIG. 9 illustrates exemplary signaling in a wireless environment including a first electronic device that executes again an attempt of synchronization to BIS based on a failure of synchronization to a BIS from a third electronic device executed during first periodic advertisement intervals.
FIG. 10 illustrates an example of operations of a first electronic device that requests second information to a fourth electronic device based on a failure of synchronization to a BIS from a third electronic device executed during first periodic advertisement intervals.
FIG. 11 illustrates an example of operations of a fourth electronic device for providing second information requested from a first electronic device based on a failure of synchronization to a BIS from a third electronic device executed during first periodic advertisement intervals.
FIG. 12 is a block diagram of an electronic device in a network environment according to various embodiments.

### [Mode for Invention]

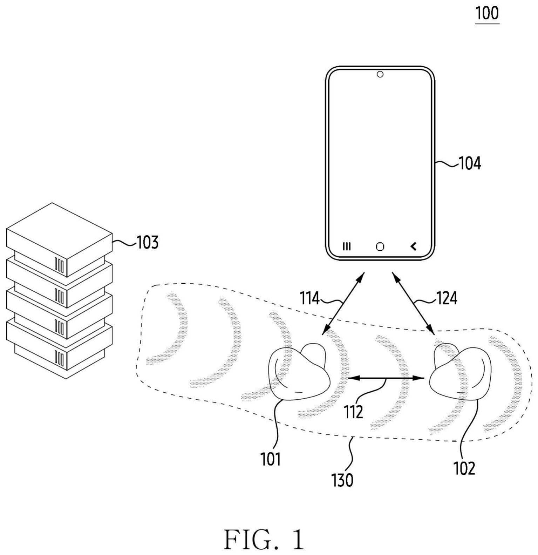

FIG. 1 illustrates an exemplary wireless environment including a first electronic device, a second electronic device, a third electronic device, and a fourth electronic device.

Referring to FIG. 1, a wireless environment 100 may include a first electronic device 101, a second electronic device 102, and a third electronic device 103. For example, the wireless environment 100 may further include a fourth electronic device 104.

The first electronic device 101 and the second electronic device 102 in a wireless environment 100 may be used to output audio provided from the third electronic device 103. For example, the first electronic device 101 and the second electronic device 102 may be paired. As a non-limited example, pairing of the first electronic device 101 and the second electronic device 102 may indicate that the first electronic device 101 and the second electronic device 102 are configured as a set (or a group) to provide a service. As a non-limited example, a pairing of the first electronic device 101 and the second electronic device 102 may indicate that the first electronic device 101 and the second electronic device 102 are connected through a link 112.

For example, the audio may be outputted based on data 130 for a broadcast isochronous stream (BIS) from the third electronic device 103. For example, data 130 may be broadcasted from the third electronic device 103 through a broadcast isochronous group (BIG). For example, the BIG may include multiple instances for the BIS. For example, the BIG may include one or more BIS events. For example, each of the one or more BIS events may include one or more sub-events.

For example, the one or more BIS events may include a BIS event for the first electronic device 101 and a BIS event for the second electronic device 102. For example, audio outputted through the BIS event for the first electronic device 101 and audio outputted through the BIS event for the second electronic device 102 may be the same or different from each other. For example, when the audio outputted through the BIS event for the first electronic device 101 and the audio outputted through the BIS event for the second electronic device 102 are different, data 130 received by the first electronic device 101 may be at least partially different from data 130 received by the second electronic device 102. For example, audio outputted based on the data 130 received by the first electronic device 101 may provide content in a first language, and audio outputted based on the data 130 received by the second electronic device 102 may provide the content in a second language. For example, audio outputted based on the data 130 received by the first electronic device 101 and audio outputted based on the data 130 received by the second electronic device 102 may provide stereophonic sound. However, embodiments of the disclosure are not limited thereto.

For example, when synchronization to the BIS is obtained, each of the first electronic device 101 and the second electronic device 102 may receive all of data 130 broadcasted through each of the one or more BIS events. For example, the first electronic device 101 may receive data broadcasted from the third electronic device 103 for audio outputted from the second electronic device 102, which is at least partially different from audio outputted from the first electronic device 101.

As a non-limited example, each of the first electronic device 101 and the second electronic device 102 may be connected to the fourth electronic device 104 through each of a link 114 and a link 124. For example, the link 114 and the link 124 may include an asynchronous connectionless link (ACL), which is a control data link. For example, the link 114 and the link 124 may be used for 'first information' that is described below. For example, each of the link 114 and the link 124 may be used for data transmitted from the fourth electronic device 104 to each of the first electronic device 101 and the second electronic device 102 through a connected isochronous stream (CIS) for outputting audio provided from the fourth electronic device 104.

The third electronic device 103 in the wireless environment 100 may broadcast data 130 for the audio. Although not illustrated in FIG. 1, the third electronic device 103 may execute one or more advertisements to provide information for accessing the data 130. For example, each of the first electronic device 101 and the second electronic device 102 may receive data 130 broadcasted from the third electronic device 103, based on resources indicated based on the one or more advertisements. For example, each of the first electronic device 101 and the second electronic device 102 may synchronize to the BIS from the third electronic device 103 based on information identified based on the one or more advertisements and receive the data 130 broadcasted from the third electronic device 103 based on the synchronization.

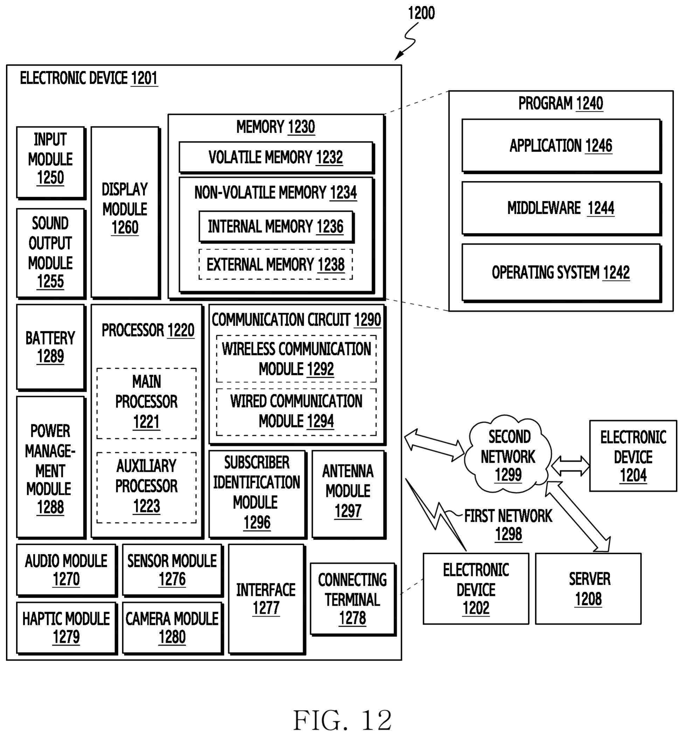

The fourth electronic device 104 in the wireless environment 100 may be used to assist each of the first electronic device 101 and the second electronic device 102 to synchronize to the BIS. For example, the fourth electronic device 104 may include at least a part of an electronic device 1201 of FIG. 12, or may correspond to at least a part of the electronic device 1201 of FIG. 12.

As a non-limited example, unlike each of the first electronic device 101 and the second electronic device 102, the fourth electronic device 104 may include a display. For example, the fourth electronic device 104 may display, on the display, a user interface for identifying whether to output the audio from the first electronic device 101 and the second electronic device 102 based on the data 130 broadcasted from the third electronic device 103. For example, the fourth electronic device 104 may be used to receive a user input, which is received with respect to the user interface and indicates outputting of the audio from the first electronic device 101 and the second electronic device 102. For example, the fourth electronic device 104 may assist each of the first electronic device 101 and the second electronic device 102 to synchronize to the BIS through operations for receiving the user input.

As a non-limited example, the fourth electronic device 104 may include a battery having a capacity greater than a rechargeable battery in each of the first electronic device 101 and the second electronic device 102. For example, in order to reduce power consumption of the rechargeable battery within each of the first electronic device 101 and the second electronic device 102, the fourth electronic device 104 may execute a scan for a part of the one or more advertisements executed by the third electronic device 103 instead of each of the first electronic device 101 and the second electronic device 102. For example, the fourth electronic device 104 may assist each of the first electronic device 101 and the second electronic device 102 to synchronize to the BIS through operations for the scan. For example, the fourth electronic device 104 may transmit first information indicating a result of the scan to each of the first electronic device 101 and the second electronic device 102. For example, the first information may be transmitted to each of the first electronic device 101 and the second electronic device 102 through each of the link 114 and the link 124. However, embodiments of the disclosure are not limited thereto. For example, the first information may be transmitted to each of the first electronic device 101 and the second electronic device 102, from a device (e.g., a cradle) for storing the first electronic device 101 and the second electronic device 102 and charging a rechargeable battery of each of the first electronic device 101 and the second electronic device 102. For example, the device for storing the first electronic device 101 and the second electronic device 102 may deliver the first information received from the fourth electronic device 104 to each of the first electronic device 101 and the second electronic device 102. For example, the device for storing the first electronic device 101 and the second electronic device 102 may execute operations of the fourth electronic device 104 to be illustrated below. For example, the device may deliver the first information obtained in accordance with advertisement of the fourth electronic device 104 to each of the first electronic device 101 and the second electronic device 102, based on the operations.

According to embodiments, the third electronic device 103 and the fourth electronic device 104 may be a single device. For example, when the fourth electronic device 104 executes a function corresponding to a source device in the wireless environment 100 together with the third electronic device 103, operations of the third electronic device 103 to be illustrated below may be replaced with operations of the fourth electronic device 104. However, embodiments of the disclosure are not limited thereto.

As a non-limited example, unlike illustration in FIG. 1, the fourth electronic device 104 may be or correspond to a device for storing the first electronic device 101 and the second electronic device 102 and charging a rechargeable battery of each of the first electronic device 101 and the second electronic device 102.

For example, at least a part of the first electronic device 101 and the second electronic device 102 may fail to synchronize to the BIS. As a non-limited example, the first electronic device 101 may fail to synchronize to the BIS, unlike the second electronic device 102 that succeeded in synchronizing to the BIS. For example, a change of a channel state for the data 130 broadcasted from the third electronic device 103 and/or a change of scheduling of the data 130 broadcasted from the third electronic device 103 may occur. For example, due to this change, the first electronic device 101 may fail to synchronize to the BIS, unlike the second electronic device 102. For example, when the first electronic device 101 fails the synchronization to the BIS and the second electronic device 102 succeeds the synchronization to the BIS, the first electronic device 101 may not output the audio, unlike the second electronic device 102 outputting the audio based on the data 130. When the first electronic device 101 does not output the audio and the second electronic device 102 outputs the audio, it may cause inconvenience to a user wearing the first electronic device 101 and the second electronic device 102. As a non-limited example, the user may cause a user input indicating to an attempt of synchronization to the BIS (again) in order to output the audio from the first electronic device 101. This user input to attempt to synchronize to the BIS again may negatively impact user experience for the first electronic device 101 and the second electronic device 102.

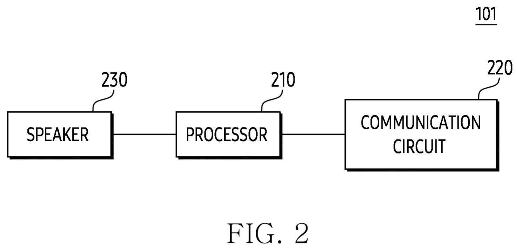

For example, the first electronic device 101 to be illustrated below may execute operations for synchronization to the BIS, before the user input is received due to a failure of the synchronization to the BIS. As a non-limited example, the user input may be received in the device for storing the first electronic device 101 and the second electronic device 102 and charging a rechargeable battery of each of the first electronic device 101 and the second electronic device 102. For example, the user input may include an input for a physical button exposed through a housing of the device, an input (e.g., a touch input) received through the display of the device, and/or an input causing a predetermined movement of the device (e.g., shaking the device). Components of the first electronic device 101 for executing the operations may be illustrated in description of FIG. 2.

FIG. 2 is a simplified block diagram of an exemplary first electronic device.

Referring to FIG. 2, a first electronic device 101 may include at least a part of an electronic device 1202 of FIG. 12, or may correspond to at least a part of the electronic device 1202 of FIG. 12. The first electronic device 101 may include a processor 210, a communication circuit 220, and a speaker 230.

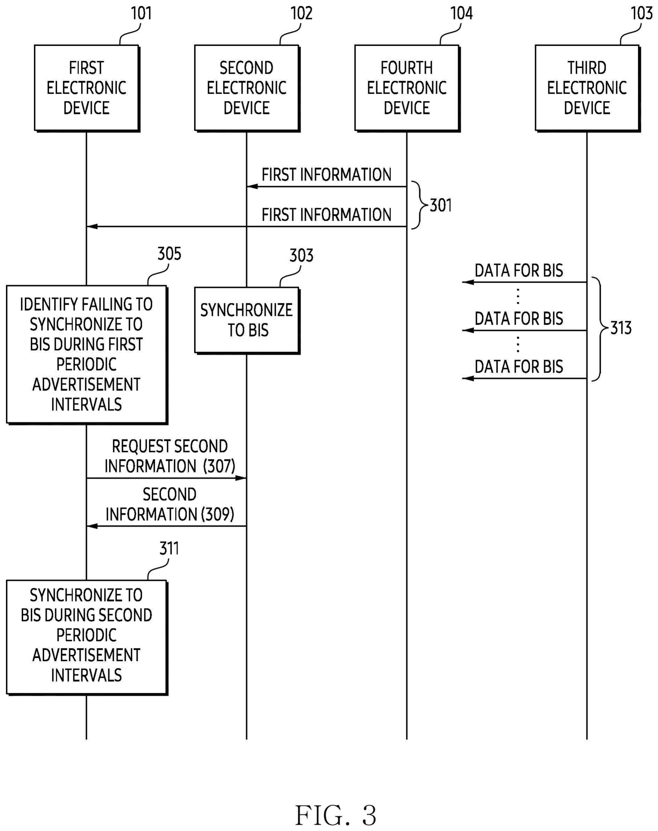

The processor 210 may include (or comprise) one or more processing circuitry. For example, the processor 210 may be operatively coupled to each of the communication circuit 220 and the speaker 230. Operative coupling of the processor 210 to each of the communication circuit 220 and the speaker 230 may indicate that the processor 210 is directly connected to each of the communication circuit 220 and the speaker 230. The operative coupling of the processor 210 to each of the communication circuit 220 and the speaker 230 may indicate that the processor 210 is connected (e.g., indirectly connected) to each of the communication circuit 220 and the speaker 230 through at least one other component of the first electronic device 101. The operative coupling of the processor 210 to each of the communication circuit 220 and the speaker 230 may indicate that the processor 210 controls each of the communication circuit 220 and the speaker 230 for at least a part of operations to be illustrated in description of FIGS. 3 to 11. The operative coupling of the processor 210 to each of the communication circuit 220 and the speaker 230 may indicate that the processor 210 executes one or more instructions for the control.

For example, the communication circuit 220 may support legacy Bluetooth and/or Bluetooth low energy (BLE).

The communication circuit 220 may be used to receive one or more packets advertised from a third electronic device 103. The communication circuit 220 may be used for the BIS. For example, the communication circuit 220 may be used for the synchronization to the BIS. For example, the communication circuit 220 may be used to receive data 130 broadcasted from the third electronic device 103.

For example, the communication circuit 220 may be used for a communication with a second electronic device 102. As a non-limited example, the communication with the second electronic device 102 may be executed for the synchronization to the BIS. For example, a network for the communication with the second electronic device 102 may be different from a network for data 130 broadcasted from the third electronic device 103. For example, the network for the communication with the second electronic device 102 may include a network for basic rate (BR) or enhanced data rate (EDR) of Bluetooth (or legacy Bluetooth). However, embodiments of the disclosure are not limited thereto.

For example, the communication circuit 220 may be used for a communication with a fourth electronic device 104. As a non-limited example, the communication with the fourth electronic device 104 may be executed for the synchronization to the BIS. For example, a network for the communication with the fourth electronic device 104 may be different from the network for the data 130 broadcasted from the third electronic device 103. The network for the communication with the fourth electronic device 104 may include a network for a CIS. However, embodiments of the disclosure are not limited thereto.

For example, the speaker 230 may be used to output the audio based on the data 130. As a non-limited example, the speaker 230 may output audio based on data received from the fourth electronic device 104.

For example, the processor 210 may execute operations of the first electronic device 101 to be exemplified below through the communication circuit 220 and/or the speaker 230 exemplified above.

Referring back to FIG. 1, the first electronic device 101 may synchronize to the BIS based on requesting second information from the second electronic device 102 after a failure of the synchronization to the BIS. This operation may be exemplified in description of FIG. 3.

FIG. 3 illustrates exemplary signaling in a wireless environment including a first electronic device that requests second information transmitted to a second electronic device based on a failure of synchronization to a broadcast isochronous stream (BIS) from a third electronic device.

Referring to FIG. 3, in operation 301, a fourth electronic device 104 may transmit 'first information' to each of a first electronic device 101 and a second electronic device 102.

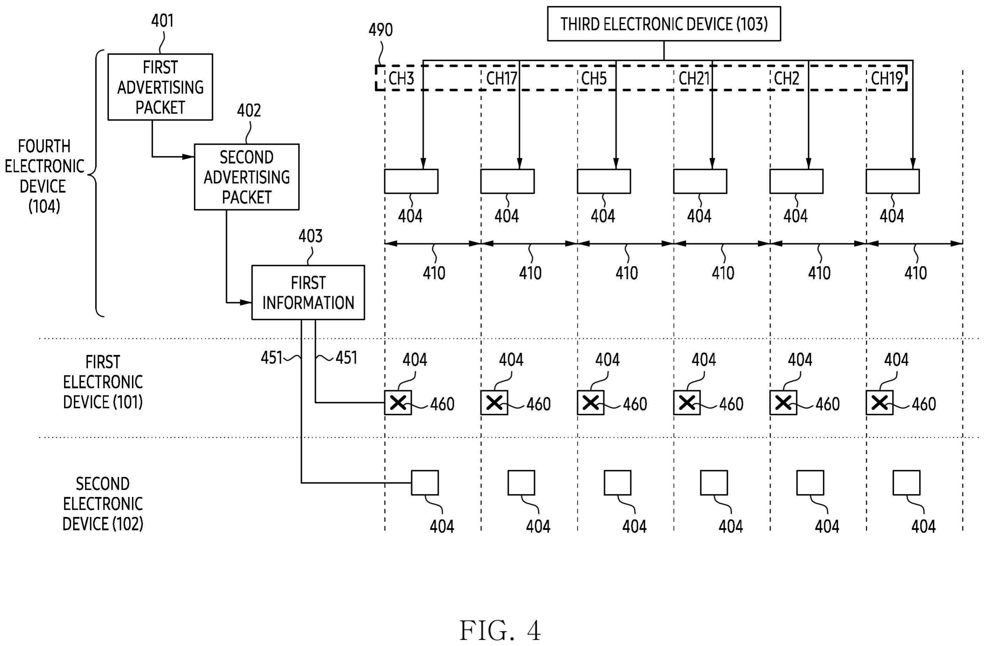

The first information may indicate information for synchronization to a BIS from a third electronic device 103. For example, the first information may include information on periodic advertisement of the third electronic device 103 executed for the synchronization to the BIS. For example, the first information may indicate an interval (e.g., first periodic advertisement intervals (e.g., first periodic advertisement intervals 410 of FIG. 4) of the third electronic device 103 to be illustrated below) of the periodic advertisement, a hopping sequence (e.g., a hopping sequence 490 of FIG. 4) of the periodic advertisement, and/or an access address for synchronizing to the BIS. For example, the periodic advertisement may include transmission of each of AUX_SYNC_IND packets (e.g., AUX_SYNC_IND packets 404 of FIG. 4) executed by the third electronic device 103 according to the hopping sequence in the interval. For example, each of the AUX_SYNC_IND packets may include periodic advertisement data.

The fourth electronic device 104 may receive advertising packets broadcasted from the third electronic device 103, obtain the first information based on the received advertising packets, and transmit the first information to each of the first electronic device 101 and the second electronic device 102. The operation of obtaining the first information and transmission of the first information may be exemplified in description of FIG. 4.

FIG. 4 illustrates an example of a failure of synchronization to a BIS from a third electronic device executed during first periodic advertisement intervals.

Referring to FIG. 4, a fourth electronic device 104 may receive a first advertising packet 401 (e.g., ADV_EXT_IND packet) broadcasted on each of primary advertising channels (e.g., Ch 37, Ch 38, and Ch 39) from a third electronic device 103 and indicating that additional data is provided through other (or additional) advertisement (e.g., extended advertisement). For example, the first advertising packet 401 may indicate a second advertising packet 402 (e.g., AUX_ADV_IND packet) (or an extended advertising packet). For example, based on the first advertising packet 401, the fourth electronic device 104 may receive the second advertising packet 402 broadcasted on a part of secondary advertising channels different from the primary advertising channels and indicating the periodic advertisement, from the third electronic device 103. For example, based on the second advertising packet 402, the fourth electronic device 104 may obtain first information 403 (e.g., logical link (LL)_PERIODIC_SYNC_IND), and transmit the first information 403 to each of a first electronic device 101 and a second electronic device 102 as indicated by each of arrows 451.

Referring back to FIG. 3, the first information may be transmitted from the fourth electronic device 104 to each of the first electronic device 101 and the second electronic device 102 through various methods. For example, the first information may be transmitted to the first electronic device 101 through a link 114 and to the second electronic device 102 through a link 124. For example, when each of the link 114 and the link 124 are not established, the first information may be transmitted to each of the first electronic device 101 and the second electronic device 102 through advertisement of the fourth electronic device 104. For example, when the first information is transmitted before each of the link 114 and the link 124 is established, the first information may be broadcasted from the fourth electronic device 104.

For example, each of the first electronic device 101 and the second electronic device 102 may receive the first information.

In operation 303, the second electronic device 102 may synchronize to the BIS from the third electronic device 103 based on the first information. For example, the second electronic device 102 may identify the periodic advertisement based on the first information and synchronize to the BIS based on receiving each of the AUX_SYNC_IND packets broadcasted from the third electronic device 103 through the identified periodic advertisement. For example, the second electronic device 102 may successfully synchronize to the BIS based on obtaining information regarding a broadcast isochronous group (BIG) (e.g. including multiple instances for the BIS) included in each of the AUX_SYNC_IND packets. For example, based on the synchronization to the BIS, the second electronic device 102 may receive data (e.g., the data 130 of FIG. 1) for the BIS broadcasted from the third electronic device 103 as in operation 313. The synchronization of the second electronic device 102 to the BIS may be exemplified in description of FIG. 4.

For example, referring to FIG. 4, the second electronic device 102 may receive the first information 403 from the fourth electronic device 104 as indicated by arrow 451. For example, the second electronic device 102 may receive at least a part of AUX_SYNC_IND packets 404 broadcasted from the third electronic device 103 for the periodic advertisement, based on the first information 403. For example, the second electronic device 102 may successfully synchronize to the BIS, based on advertisement data in at least a part of the AUX_SYNC_IND packets 404 received from the third electronic device 103.

Referring back to FIG. 3, in operation 305, the first electronic device 101 may identify failing to synchronize to the BIS during first periodic advertisement intervals of the third electronic device 103 indicated by the first information. The identification may be exemplified in description of FIG. 4.

Referring to FIG. 4, the first electronic device 101 may receive the first information 403 from the fourth electronic device 104 as indicated by arrow 451. For example, the first electronic device 101 may execute an attempt of reception of the AUX_SYNC_IND packets 404 broadcasted from the third electronic device 103 during the first periodic advertisement intervals 410 indicated by the first information 403. For example, unlike the second electronic device 102, the first electronic device 101 may fail to synchronize to the BIS during the first periodic advertisement intervals 410, as indicated by each of indications 460. As a non-limited example, the first electronic device 101 may fail to synchronize to the BIS by failing to receive the AUX_SYNC_IND packets 404 during the first periodic advertisement intervals 410. As a non-limited example, the first electronic device 101 may fail to synchronize to the BIS, by failing to discover the data for the BIS broadcasted from the third electronic device 103 as shown in operation 313 based on at least a part of the AUX_SYNC_IND packets 404 received during the first periodic advertisement intervals 410. For example, a failure of synchronization to the BIS may be caused by a change in scheduling of the data for the BIS. For example, the failure of synchronization to the BIS may be caused by a change in a state of a channel (or link) between the first electronic device 101 and the third electronic device 103. However, embodiments of the disclosure are not limited thereto.

For example, the failure of synchronization to the BIS may include missing (or losing) synchronization to the BIS. As a non-limited example, the first electronic device 101 may receive data (e.g., data for audio according to an incoming call received by the fourth electronic device 104) received through a CIS event (or a sub-event of the CIS event) using the link 114 while outputting audio based on synchronization to the BIS. For example, the first electronic device 101 may output audio based on the data in response to the reception. For example, after outputting the audio, the first electronic device 101 may fail to synchronize to the BIS and identify (or recognize) a failure to synchronize to the BIS.

For example, a total length of the first periodic advertisement intervals 410 may be determined based on a timeout parameter of the periodic advertisement. As a non-limited example, a number of first periodic advertisement intervals 410 corresponding to each of events in the periodic advertisement may be six (6), as shown in FIG. 4.

Referring back to FIG. 3, in operation 307, the first electronic device 101 may request second information for synchronizing to the BIS based on the identification in operation 305. For example, the first electronic device 101 may transmit the request to the second electronic device 102. For example, the request may be transmitted through the link 112. As a non-limited example, the first electronic device 101 may transmit the request to the second electronic device 102 through the link 112, based on release of the link 114 with the fourth electronic device 104. For example, the second electronic device 102 may receive the request. For example, the request may be transmitted through a packet periodically exchanged through the link 112 between the first electronic device 101 and the second electronic device 102. For example, when a state for outputting audio from the first electronic device 101 is different from a state for outputting audio from the second electronic device 102, the first electronic device 101 may identify that the state of the output of the audio from the first electronic device 101 is different from the state for the output of the audio from the second electronic device 102, and transmit the request to the second electronic device 102 through the packet, so that the state of the output of the audio from the first electronic device 101 corresponds to the state for the output of the audio from the second electronic device 102. However, embodiments of the disclosure are not limited thereto.

For example, the request may be transmitted to the second electronic device 102 through various methods. For example, the request may be transmitted to the second electronic device 102 in response to identifying a failure of synchronization to the BIS, without identifying whether the second electronic device 102 is synchronized to the BIS. For example, the request may be transmitted to the second electronic device 102, based on identifying that the second electronic device 102 is synchronized to the BIS in response to identifying a failure of synchronization to the BIS. For example, the request may be transmitted to the second electronic device 102 after executing an attempt of synchronization to the BIS (again) based on the first information in response to identifying a failure of synchronization to the BIS.

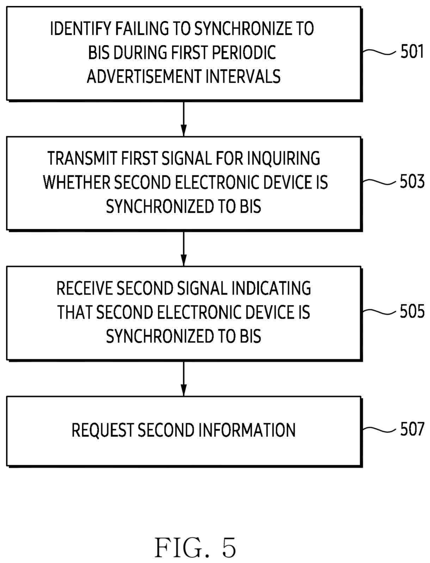

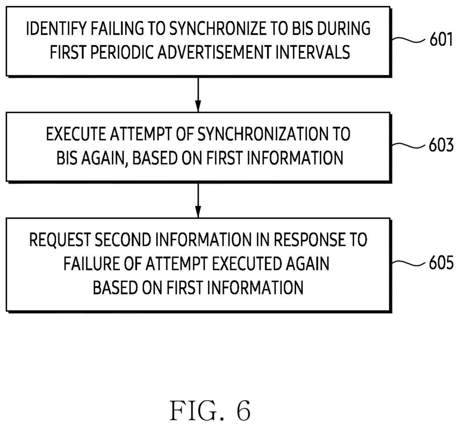

Requesting the second information to the second electronic device 102 based on identifying that the second electronic device 102 is synchronized to the BIS and requesting the second information to the second electronic device 102 after executing an attempt of synchronization to the BIS (again) based on the first information may be exemplified in description of FIGS. 5 and 6.

FIGS. 5 and 6 illustrate an example of operations executed in a first electronic device before requesting second information to a second electronic device.

Referring to FIG. 5, in operation 501, the first electronic device 101 may identify failing to synchronize to the BIS during the first periodic advertisement intervals. For example, operation 501 may correspond to operation 305 of FIG. 3.

In operation 503, the first electronic device 101 may transmit a first signal for inquiring whether a second electronic device 102 is synchronized to the BIS to the second electronic device 102, in response to the identification in operation 501. For example, the first signal may be transmitted to the second electronic device 102 to identify whether to request the second information to the second electronic device 102. For example, the first signal may be transmitted through a link 112. However, embodiments of the disclosure are not limited thereto.

For example, operation 503 may be executed, after executing again an attempt of the synchronization to the BIS based on the first information according to operation 603 of FIG. 6 to be described below and failing to the attempt executed again.

In operation 505, the first electronic device 101 may receive a second signal indicating that the second electronic device 102 is synchronized to the BIS from the second electronic device 102. For example, the second signal may be received through the link 112.

In operation 507, the first electronic device 101 may request the second information to the second electronic device 102 based on the second signal. For example, operation 507 may correspond to operation 307 of FIG. 3.

For example, operation 505 and operation 507 (or operation 307 in FIG. 3) of FIG. 5 may be omitted according to implementation. For example, in operation 503, the second electronic device 102 may transmit the second information to the first electronic device 101 instead of the second signal, in response to the first signal received from the first electronic device 101. For example, transmitting the second information in response to the first signal may reduce signaling between the first electronic device 101 and the second electronic device 102.

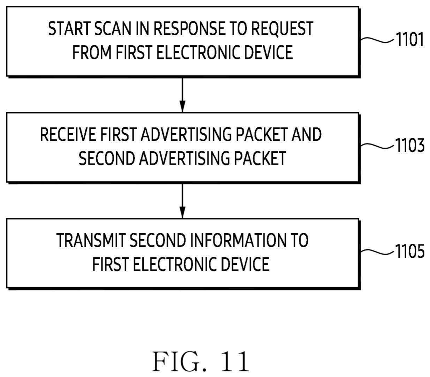

Although not shown in FIG. 5, the first electronic device 101 may request the second information to the fourth electronic device 104, on a condition of receiving a signal indicating a failure of the synchronization to the BIS from the second electronic device 102. Operations of the fourth electronic device 104 according to a request of the second information will be described through FIG. 11.

Referring to FIG. 6, in operation 601, the first electronic device 101 may identify failing to synchronize to the BIS during the first periodic advertisement intervals. For example, operation 501 may correspond to operation 305 of FIG. 3.

In operation 603, the first electronic device 101 may execute a repeated attempt of the synchronization to the BIS, based on the first information received from the fourth electronic device 104. As a non-limited example, since scheduling (or the periodic advertisement of the third electronic device 103) of a broadcast of the data for the BIS as operation 313 may correspond to the first information, the first electronic device 101 may execute the repeated attempt of the synchronization to the BIS based on the first information.

In operation 605, the first electronic device 101 may request the second information to the second electronic device 102, in response to a failure of the repeated attempt executed based on the first information as shown in operation 603. For example, the request of the second information may correspond to operation 307 of FIG. 3.

For example, unlike illustration in FIG. 6, the first electronic device 101 may execute operations 503 to 505 before requesting the second information in response to the failure. For example, the first electronic device 101 may transmit the first signal to the second electronic device 102 in response to the failure, and request the second information to the second electronic device 102 based on the second signal received from the second electronic device 102 in response to the first signal.

Referring back to FIG. 3, in operation 309, the second electronic device 102 may transmit the second information to the first electronic device 101 in response to the request from the first electronic device 101. For example, the second information may be transmitted through the link 112. For example, the first electronic device 101 may receive the second information. For example, the second information may include information for synchronizing to the BIS.

For example, the second information may indicate an interval (e.g., the second periodical advertisement intervals of the third electronic device 103 to be illustrated below) of periodic advertisement executed by the third electronic device 103, a hopping sequence of the periodic advertisement, and/or an access address for synchronizing to the BIS. As a non-limited example, the second information may be at least partially different from the first information. For example, when the periodic advertisement is changed, the second information may be at least partially different from the first information. For example, the second information may indicate an interval that is at least partially different from an interval indicated by the first information, or a hopping sequence that is at least partially different from a hopping sequence indicated by the first information. However, embodiments of the disclosure are not limited thereto. As a non-limited example, a difference between the first information and the second information may be caused by a control sub-event in a BIS event in the BIG including the multiple instances of the BIS.

In operation 311, the first electronic device 101 may synchronize to the BIS during the second periodic advertisement intervals of the third electronic device 103 indicated based on the second information. For example, since the second electronic device 102 is synchronized to the BIS, the first electronic device 101 may successfully synchronize to the BIS based on the second information. For example, the first electronic device 101 may receive the data for the BIS broadcasted in accordance with operation 313 and output the audio based on the data.

For example, operation 307, operation 309, and operation 311 may be executed before a user input indicating requesting the synchronization again is received after the synchronization to the BIS is failed based on the first information. For example, the user input may be received through the first electronic device 101, be received through a user interface displayed on a display of the fourth electronic device 104, or be received through a case device for storing the first electronic device 101 and the second electronic device 102. For example, since operation 307, operation 309, and operation 311 are executed before the user input is received, a user may listen to the audio according to the data for the BIS broadcasted from the third electronic device 103 by using the first electronic device 101 worn by the user without the user input. For example, when the user input is received through the user interface, the first electronic device 101 may output the audio based on operation 307, operation 309, and operation 311 before the user interface is displayed. For example, the first electronic device 101 may provide enhanced responsiveness through operations illustrated through at least a part of FIGS. 3, 5, and 6.

For example, since the first electronic device 101 receives the first information from the fourth electronic device 104 as described above, the first electronic device 101 may reduce power consumption of a rechargeable battery of the first electronic device 101, by refraining from or bypassing receiving the first advertising packet and the second advertising packet from the third electronic device 103.

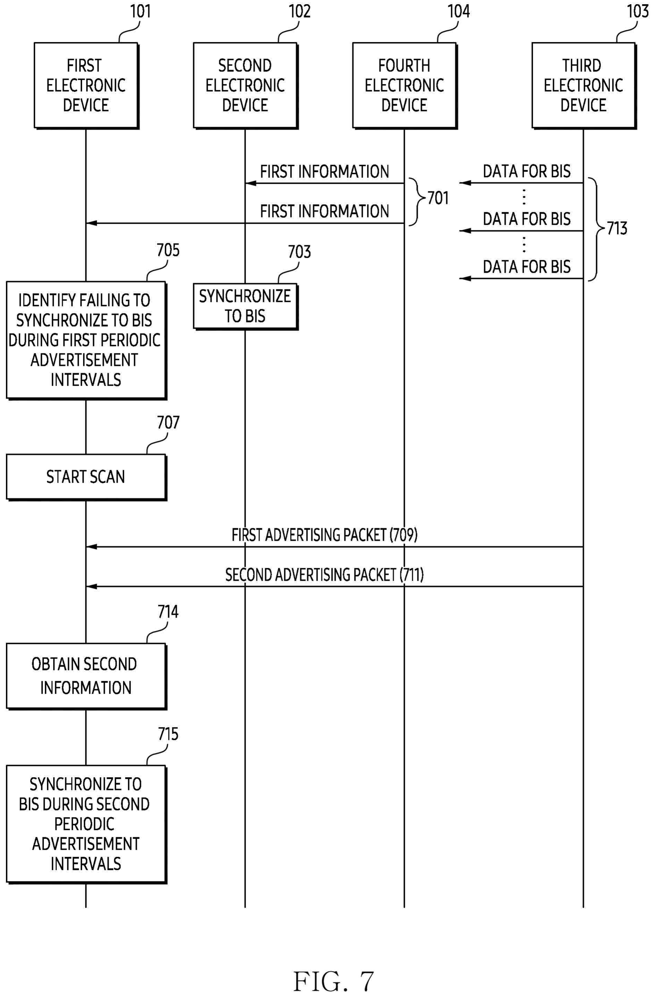

Referring back to FIG. 1, unlike at least a part of the operations illustrated in the description of FIGS. 3, 5, and 6, the first electronic device 101 may execute a scan for the one or more advertisements executed in the third electronic device 103 after a failure of the synchronization to the BIS. For example, the first electronic device 101 may synchronize to the BIS based on receiving the first advertising packet and the second advertising packet in response to the failure of the synchronization to the BIS. This operation may be described with respect to FIG. 7.

FIG. 7 illustrates exemplary signaling in a wireless environment including a first electronic device that receives a first advertising packet and a second advertising packet based on a failure of synchronization to a BIS from a third electronic device executed during first periodic advertisement intervals.

Referring to FIG. 7, in operation 701, a fourth electronic device 104 may transmit first information to each of a first electronic device 101 and a second electronic device 102. For example, operation 701 may at least partially correspond to operation 301 of FIG. 3.

In operation 703, the second electronic device 102 may synchronize to the BIS from the third electronic device 103 based on the first information. For example, based on the synchronization to the BIS, the second electronic device 102 may receive data (e.g., the data 130 of FIG. 1) for the BIS broadcasted from the third electronic device 103 as shown in operation 713. For example, operation 703 may at least partially correspond to operation 303 of FIG. 3.

Although FIG. 7 illustrates operation 703, operations 705, 707, 709, 711, 714, and 715 of FIG. 7 may be executed independently of operation 703 of FIG. 7, embodiments of the disclosure are not limited thereto.

In operation 705, the first electronic device 101 may identify failing to synchronize to the BIS during first periodic advertisement intervals of the third electronic device 103 indicated by the first information. For example, operation 705 may correspond to operation 305 of FIG. 3.

In operation 707, the first electronic device 101 may start a scan for the one or more advertisements executed by the third electronic device 103, based on the identification in operation 705. As a non-limited example, the first electronic device 101 may execute operation 707 based on release of a link 114 with the fourth electronic device 104.

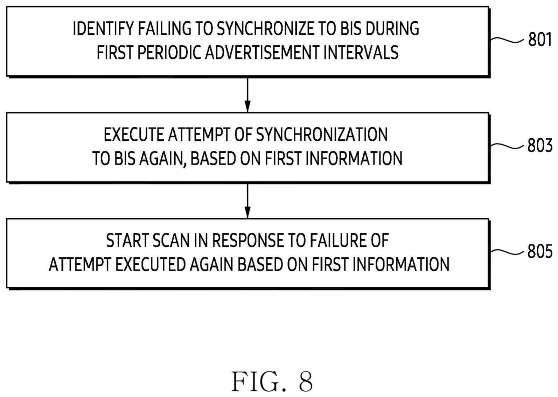

For example, the start of the scan may be executed through various methods. For example, the start of the scan may be executed without executing again an attempt of the synchronization to the BIS based on the first information in response to identifying failing to synchronization to the BIS in operation 705. For example, the start of the scan may execute again the attempt of the synchronization to the BIS based on the first information in response to identifying failing to synchronizing to the BIS in operation 705, and may also be executed in response to the failure of the synchronization executed again. The start of the scan executed in response to the failure of the synchronization executed again may be illustrated in description of FIG. 8.

FIG. 8 illustrates an example of operations executed in a first electronic device before receiving a first advertising packet and a second advertising packet.

Referring to FIG. 8, in operation 801, a first electronic device 101 may identify failing to synchronize to the BIS during the first periodic advertisement intervals. For example, operation 801 may correspond to operation 705 of FIG. 7.

In operation 803, the first electronic device 101 may execute (again) an attempt of synchronization to the BIS based on the first information received from the fourth electronic device 104. As a non-limited example, since scheduling (or the periodic advertisement executed by the third electronic device 103) of a broadcast of the data for the BIS as shown in operation 713 may correspond to the first information, the first electronic device 101 may execute again the attempt of the synchronization to the BIS based on the first information.

In operation 805, the first electronic device 101 may start the scan in response to a failure of the repeated attempt executed based on the first information as operation 803. For example, the start of the scan may correspond to operation 707 of FIG. 7.

Referring back to FIG. 7, in operation 709, the first electronic device 101 may receive a first advertising packet broadcasted on a primary advertising channel from the third electronic device 103, based on the scan in operation 707. For example, the first advertising packet (e.g., ADV_EXT_IND packet) may indicate to provide additional advertising data through another advertisement (e.g., extended advertisement). For example, the first advertising packet may indicate a second advertising packet (e.g., AUX_ADV_IND packet). For example, the first advertising packet may correspond to the first advertising packet 401 of FIG. 4.

In operation 711, the first electronic device 101 may receive the second advertising packet broadcasted on a part of secondary advertising channels from the third electronic device 103, based on the first advertising packet. For example, the second advertising packet may indicate the periodic advertisement executed by the third electronic device 103. For example, the second advertising packet may indicate an interval (e.g., the second periodical advertisement intervals to be illustrated below) of the periodic advertisement, a hopping sequence of the periodic advertisement, and/or an access address for synchronizing to the BIS.

In operation 714, the first electronic device 101 may obtain second information for synchronizing to the BIS based on the second advertising packet. For example, the second information may correspond to the second information exemplified in the description of operations 309 and 311 of FIG. 3.

In operation 715, the first electronic device 101 may synchronize to the BIS during the second periodic advertisement intervals of the third electronic device 103 indicated based on the second information. For example, operation 715 may correspond to operation 311 of FIG. 3.

As described above, the first electronic device 101 may obtain the second information through a scan executed by the first electronic device 101 instead of requesting the second information to the second electronic device 102 exemplified in the description of FIG. 3. For example, the first electronic device 101 may obtain the second information within a standalone state for the second electronic device 102 paired with the first electronic device 101 through the scan and synchronize to the BIS based on the second information.

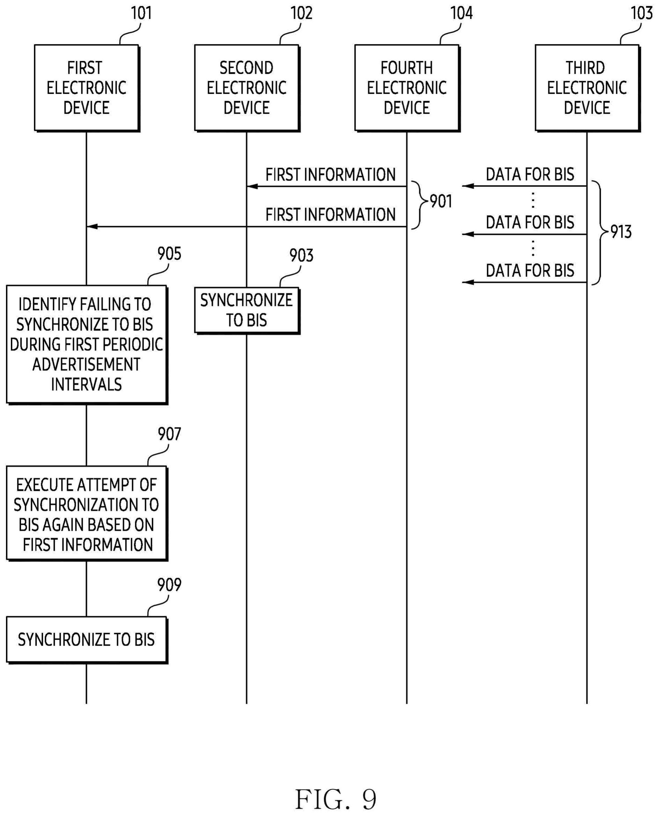

Referring back to FIG. 1, unlike at least a part of the operations exemplified in the description of FIGS. 3, 5, 6, 7, and 8, after a failure of the synchronization to the BIS, the first electronic device 101 may attempt synchronization to the BIS again based on the first information. This operation may be exemplified in description of FIG. 9.

FIG. 9 illustrates exemplary signaling in a wireless environment including a first electronic device that executes again an attempt of synchronization to BIS based on a failure of synchronization to a BIS from a third electronic device executed during first periodic advertisement intervals.

Referring to FIG. 9, in operation 901, a fourth electronic device 104 may transmit first information to each of a first electronic device 101 and a second electronic device 102. For example, operation 701 may at least partially correspond to operation 301 of FIG. 3.

In operation 903, the second electronic device 102 may synchronize to the BIS from the third electronic device 103 based on the first information. For example, the second electronic device 102 may receive data (e.g., the data 130 of FIG. 1) for the BIS broadcasted from the third electronic device 103 as shown in operation 913, based on the synchronization to the BIS. For example, operation 903 may at least partially correspond to operation 303 of FIG. 3.

Although FIG. 9 illustrates operation 903, operations 905, 907, and 909 of FIG. 9 may be executed independently of operation 903 of FIG. 9, embodiments of the disclosure are not limited thereto.

In operation 905, the first electronic device 101 may identify failing to synchronize to the BIS during first periodic advertisement intervals of the third electronic device 103 indicated by the first information. For example, operation 905 may correspond to operation 305 of FIG. 3.

In operation 907, the first electronic device 101 may execute (again) an attempt of synchronization to the BIS based on the first information. As a non-limited example, since scheduling (or the periodic advertisement executed by the third electronic device 103) of a broadcast of the data for the BIS may correspond to the first information, the first electronic device 101 may execute again the attempt of the synchronization to the BIS. For example, the first electronic device 101 may execute operation 907 to provide quick responsiveness. For example, the first electronic device 101 may execute again the attempt of the synchronization to the BIS in order to successfully execute the synchronization to the BIS within a standalone state for the second electronic device 102 and the fourth electronic device 104. As a non-limited example, the first electronic device 101 may execute operation 907 based on release of a link 114 with the fourth electronic device 104.

In operation 909, the first electronic device 101 may synchronize to the BIS based on the first information. For example, the first electronic device 101 may successfully synchronize to the BIS, based on receiving each of the AUX_SYNC_IND packets during the first periodic advertisement intervals indicated based on the first information.

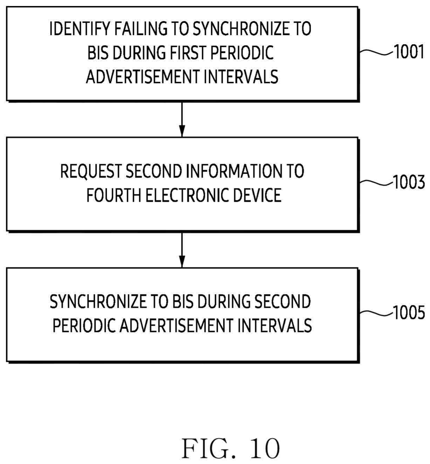

Referring back to FIG. 1, unlike at least a part of the operations exemplified in the description of FIGS. 3, 5, 6, 7, 8, and 9, after a failure of the synchronization to the BIS, the first electronic device 101 may synchronize to the BIS based on requesting the second information to the fourth electronic device 104. This operation may be exemplified in description of FIG. 10.

FIG. 10 illustrates an example of operations of a first electronic device that requests second information to a fourth electronic device based on a failure of synchronization to a BIS from a third electronic device executed during first periodic advertisement intervals.

Referring to FIG. 10, in operation 1001, a first electronic device 101 may identify failing to synchronize to the BIS during first periodic advertisement intervals of a third electronic device 103 indicated based on first information for synchronization to the BIS from the third electronic device 103. For example, operation 1001 may correspond to operation 305 of FIG. 3.

In operation 1003, the first electronic device 101 may request second information for synchronizing to the BIS to the fourth electronic device 104, based on the identification. For example, the request may be transmitted from the first electronic device 101 through a link 114. The request may be further used to indicate failing to synchronize to the BIS identified in operation 1001 to the fourth electronic device 104. The fourth electronic device 104 may receive the request.

In operation 1005, the first electronic device 101 may synchronize to the BIS during second periodic advertisement intervals of the third electronic device 103 indicated based on the second information received from the fourth electronic device 104 in accordance with the request. For example, the second information may correspond to the second information exemplified in the descriptions of FIGS. 3, 5, 6, and 7. As a non-limited example, the second information received from the fourth electronic device 104 may be obtained in the fourth electronic device 104 based on a scan executed again by the fourth electronic device 104. For example, in response to the request received in accordance with operation 1003, the fourth electronic device 104 may execute other reception of the first advertising packet and the second advertising packet distinguished from reception of the first advertising packet and the second advertising packet illustrated in the description of FIG. 4. This operation may be exemplified in description of FIG. 11.

FIG. 11 illustrates an example of operations of a fourth electronic device for providing second information requested from a first electronic device based on a failure of synchronization to a BIS from a third electronic device executed during first periodic advertisement intervals.

Referring to FIG. 11, in operation 1101, a fourth electronic device 104 may start a scan in response to the request from the first electronic device 101 in accordance with operation 1003. For example, the scan may be executed to receive the first advertising packet (e.g., ADV_EXT_IND) and the second advertising packet (e.g., AUX_ADV_IND) broadcasted from the third electronic device 103.

In operation 1103, the fourth electronic device 104 may receive the first advertising packet and the second advertising packet according to the scan. For example, the fourth electronic device 104 may receive the first advertising packet. For example, the first advertising packet may be broadcasted from the third electronic device 103 on each of the primary advertising channels. For example, the first advertising packet may indicate providing additional advertising data through another advertisement. For example, the first advertising packet may indicate the second advertising packet. For example, the fourth electronic device 104 may receive the second advertising packet based on the first advertising packet. For example, the second advertising packet may be broadcasted on a part of the secondary advertising channels. For example, the second advertising packet may indicate the periodic advertisement executed by the third electronic device 103. For example, the fourth electronic device 104 may obtain the second information (e.g., LL_PERIODIC_SYNC_IND), based on the second advertising packet. As a non-limited example, the second information may be at least partially different from the first information.

In operation 1105, the fourth electronic device 104 may transmit the second information to the first electronic device 101. According to embodiments, the second information may be transmitted from the fourth electronic device 104 to the first electronic device 101 through the second electronic device 102. For example, when quality of the link 124 is better than the link 114, the fourth electronic device 104 may transmit the second information to the second electronic device 102 through the link 124, and the second electronic device 102 may transmit the second information to the first electronic device 101 through the link 112. However, embodiments of the disclosure are not limited thereto.

Referring back to FIG. 10, the first electronic device 101 may receive the second information from the fourth electronic device 104, and successfully synchronize to the BIS based on the second information.

As described above, the first electronic device 101 may reduce power consumption of a rechargeable battery of the first electronic device 101, by requesting the fourth electronic device 104 to execute a scan for receiving the first advertising packet and the second advertising packet.

The fourth electronic device 104 exemplified in a part of the descriptions of FIGS. 1 to 11 may be exemplified in description of FIG. 12.

FIG. 12 is a block diagram of an electronic device 1201 in a network environment 1200 according to various embodiments. Referring to FIG. 12, the electronic device 1201 in the network environment 1200 may communicate with an electronic device 1202 through a first network 1298 (e.g., a short-range wireless communication network), or at least one of an electronic device 1204 or a server 1208 through a second network 1299 (e.g., a long-distance wireless communication network). According to an embodiment, the electronic device 1201 may communicate with the electronic device 1204 through the server 1208. According to an embodiment, the electronic device 1201 may include a processor 1220, a memory 1230, an input module 1250, an audio module 1255, a display module 1260, an audio module 1270, a sensor module 1276, an interface 1277, a connecting terminal 1278, a haptic module 1279, a camera module 1280, a power management module 1288, a battery 1289, a communication circuit 1290, a subscriber identification module 1296, or an antenna module 1297. In some embodiments, at least one of components (e.g., the connecting terminal 1278) may be omitted from the electronic device 1201, or one or more other components may be added in the electronic device 1201. In some embodiments, some of the components (e.g., the sensor module 1276, the camera module 1280, or the antenna module 1297) may be implemented as a single component (e.g., the display module 1260).

The processor 1220 may execute, for example, software (e.g., a program 1240) to control at least one other component (e.g., a hardware or software component) of the electronic device 1201 coupled with the processor 1220, and may perform various data processing or computation. According to an embodiment, as at least part of the data processing or computation, the processor 1220 may store a command or data received from another component (e.g., the sensor module 1276 or the communication circuit 1290) in volatile memory 1232, process the command or the data stored in the volatile memory 1232, and store resulting data in non-volatile memory 1234. According to an embodiment, the processor 1220 may include a main processor 1221 (e.g., a central processing unit (CPU) or an application processor (AP)), or an auxiliary processor 1223 (e.g., a graphics processing unit (GPU), a neural processing unit (NPU), an image signal processor (ISP), a sensor hub processor, or a communication processor (CP)) that is operable independently from, or in conjunction with, the main processor 1221. For example, when the electronic device 1201 includes the main processor 1221 and the auxiliary processor 1223, the auxiliary processor 1223 may be adapted to consume less power than the main processor 1221, or to be specific to a specified function. The auxiliary processor 1223 may be implemented as separate from, or as part of the main processor 1221.

The auxiliary processor 1223 may control at least some of functions or states related to at least one component (e.g., the display module 1260, the sensor module 1276, or the communication circuit 1290) among the components of the electronic device 1201, instead of the main processor 1221 while the main processor 1221 is in an inactive (e.g., sleep) state, or together with the main processor 1221 while the main processor 1221 is in an active state (e.g., executing an application). According to an embodiment, the auxiliary processor 1223 (e.g., an image signal processor or a communication processor) may be implemented as part of another component (e.g., the camera module 1280 or the communication circuit 1290) functionally related to the auxiliary processor 1223. According to an embodiment, the auxiliary processor 1223 (e.g., the neural processing unit) may include a hardware structure specified for artificial intelligence model processing. An artificial intelligence model may be generated by machine learning. Such learning may be performed, e.g., by the electronic device 1201 where the artificial intelligence is performed or via a separate server (e.g., the server 1208). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 1230 may store various data used by at least one component (e.g., the processor 1220 or the sensor module 1276) of the electronic device 1201. The various data may include, for example, software (e.g., the program 1240) and input data or output data for a command related thereto. The memory 1230 may include the volatile memory 1232 or the non-volatile memory 1234.

The program 1240 may be stored in the memory 1230 as software, and may include, for example, an operating system (OS) 1242, middleware 1244, or an application 1246.

The input module 1250 may receive a command or data to be used by another component (e.g., the processor 1220) of the electronic device 1201, from the outside (e.g., a user) of the electronic device 1201. The input module 1250 may include, for example, a microphone, a mouse, a keyboard, a key (e.g., a button), or a digital pen (e.g., a stylus pen).

The sound output module 1255 may output sound signals to the outside of the electronic device 1201. The sound output module 1255 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 1260 may visually provide information to the outside (e.g., a user) of the electronic device 1201. The display module 1260 may include, for example, a display, a hologram device, or a projector and control circuit to control a corresponding one of the display, hologram device, and projector. According to an embodiment, the display module 1260 may include a touch sensor adapted to detect a touch, or a pressure sensor adapted to measure the intensity of force incurred by the touch.

The audio module 1270 may convert a sound into an electrical signal and vice versa. According to an embodiment, the audio module 1270 may obtain the sound via the input module 1250, or output the sound via the sound output module 1255 or a headphone of an external electronic device (e.g., an electronic device 1202) directly (e.g., wiredly) or wirelessly coupled with the electronic device 1201.

The sensor module 1276 may detect an operational state (e.g., power or temperature) of the electronic device 1201 or an environmental state (e.g., a state of a user) external to the electronic device 1201, and then generate an electrical signal or data value corresponding to the detected state. According to an embodiment, the sensor module 1276 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 1277 may support one or more specified protocols to be used for the electronic device 1201 to be coupled with the external electronic device (e.g., the electronic device 1202) directly (e.g., wiredly) or wirelessly. According to an embodiment, the interface 1277 may include, for example, a high definition multimedia interface (HDMI), a universal serial bus (USB) interface, a secure digital (SD) card interface, or an audio interface.

A connecting terminal 1278 may include a connector via which the electronic device 1201 may be physically connected with the external electronic device (e.g., the electronic device 1202). According to an embodiment, the connecting terminal 1278 may include, for example, a HDMI connector, a USB connector, a SD card connector, or an audio connector (e.g., a headphone connector).

The haptic module 1279 may convert an electrical signal into a mechanical stimulus (e.g., a vibration or a movement) or electrical stimulus which may be recognized by a user via his tactile sensation or kinesthetic sensation. According to an embodiment, the haptic module 1279 may include, for example, a motor, a piezoelectric element, or an electric stimulator.

The camera module 1280 may capture a still image or moving images. According to an embodiment, the camera module 1280 may include one or more lenses, image sensors, image signal processors, or flashes.

The power management module 1288 may manage power supplied to the electronic device 1201. According to an embodiment, the power management module 1288 may be implemented as at least part of, for example, a power management integrated circuit (PMIC).

The battery 1289 may supply power to at least one component of the electronic device 1201. According to an embodiment, the battery 1289 may include, for example, a primary cell which is not rechargeable, a secondary cell which is rechargeable, or a fuel cell.

The communication circuit 1290 may support establishing a direct (e.g., wired) communication channel or a wireless communication channel between the electronic device 1201 and the external electronic device (e.g., the electronic device 1202, the electronic device 1204, or the server 1208) and performing communication via the established communication channel. The communication circuit 1290 may include one or more communication processors that are operable independently from the processor 1220 (e.g., the application processor (AP)) and supports a direct (e.g., wired) communication or a wireless communication. According to an embodiment, the communication circuit 1290 may include a wireless communication circuit 1292 (e.g., a cellular communication circuit, a short-range wireless communication circuit, or a global navigation satellite system (GNSS) communication circuit) or a wired communication circuit 1294 (e.g., a local area network (LAN) communication circuit or a power line communication (PLC) module). A corresponding one of these communication circuits may communicate with the external electronic device via the first network 1298 (e.g., a short-range communication network, such as Bluetooth^{™}, wireless-fidelity (Wi-Fi) direct, or infrared data association (IrDA)) or the second network 1299 (e.g., a long-range communication network, such as a legacy cellular network, a 5G network, a next-generation communication network, the Internet, or a computer network (e.g., LAN or wide area network (WAN)). These various types of communication circuits may be implemented as a single component (e.g., a single chip), or may be implemented as multi components (e.g., multi chips) separate from each other. The wireless communication circuit 1292 may identify and authenticate the electronic device 1201 in a communication network, such as the first network 1298 or the second network 1299, using subscriber information (e.g., international mobile subscriber identity (IMSI)) stored in the subscriber identification module 1296.

The wireless communication circuit 1292 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication circuit 1292 may support a high-frequency band (e.g., the mmWave band) to achieve, e.g., a high data transmission rate. The wireless communication circuit 1292 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication circuit 1292 may support various requirements specified in the electronic device 1201, an external electronic device (e.g., the electronic device 1204), or a network system (e.g., the second network 1299). According to an embodiment, the wireless communication circuit 1292 may support a peak data rate (e.g., 20Gbps or more) for implementing eMBB, loss coverage (e.g., 1264dB or less) for implementing mMTC, or U-plane latency (e.g., 0.5ms or less for each of downlink (DL) and uplink (UL), or a round trip of 12ms or less) for implementing URLLC.

The antenna module 1297 may transmit or receive a signal or power to or from the outside (e.g., the external electronic device) of the electronic device 1201. According to an embodiment, the antenna module 1297 may include an antenna including a radiating element composed of a conductive material or a conductive pattern formed in or on a substrate (e.g., a printed circuit board (PCB)). According to an embodiment, the antenna module 1297 may include a plurality of antennas (e.g., array antennas). In such a case, at least one antenna appropriate for a communication scheme used in the communication network, such as the first network 1298 or the second network 1299, may be selected, for example, by the communication circuit 1290 (e.g., the wireless communication circuit 1292) from the plurality of antennas. The signal or the power may then be transmitted or received between the communication circuit 1290 and the external electronic device via the selected at least one antenna. According to an embodiment, another component (e.g., a radio frequency integrated circuit (RFIC)) other than the radiating element may be additionally formed as part of the antenna module 1297.

According to various embodiments, the antenna module 1297 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 1201 and the external electronic device 1204 via the server 1208 coupled with the second network 1299. Each of the electronic devices 1202 or 1204 may be a device of a same type as, or a different type, from the electronic device 1201. According to an embodiment, all or some of operations to be executed at the electronic device 1201 may be executed at one or more of the external electronic devices 1202, 1204, or 1208. For example, if the electronic device 1201 should perform a function or a service automatically, or in response to a request from a user or another device, the electronic device 1201, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 1201. The electronic device 1201 may provide the outcome, with or without further processing of the outcome, as at least part of a reply to the request. To that end, a cloud computing, distributed computing, mobile edge computing (MEC), or client-server computing technology may be used, for example. The electronic device 1201 may provide ultra low-latency services using, e.g., distributed computing or mobile edge computing. In another embodiment, the external electronic device 1204 may include an internet-of-things (IoT) device. The server 1208 may be an intelligent server using machine learning and/or a neural network. According to an embodiment, the external electronic device 1204 or the server 1208 may be included in the second network 1299. The electronic device 1201 may be applied to intelligent services (e.g., smart home, smart city, smart car, or healthcare) based on 5G communication technology or IoT-related technology.

As described above, a first electronic device 101 may comprise a communication circuit 220 and a processor 210. According to an embodiment, the processor 210 may be configured to identify failing to synchronize to a broadcast isochronous stream (BIS) from a third electronic device 103 during first periodic advertisement intervals of the third electronic device 103 indicated based on first information for synchronizing to the BIS. According to an embodiment, the processor 210 may be configured to request, through the communication circuit 220, second information for synchronizing to the BIS, based on the identifying. According to an embodiment, the processor 210 may be configured to synchronize to the BIS during second periodic advertisement intervals of the third electronic device 103 indicated based on the second information received through the communication circuit 220 from the second electronic device 102 that is paired with the first electronic device 101 and is synchronized to the BIS.

According to an embodiment, the processor 210 may be configured to receive, from a fourth electronic device 104 connected through the communication circuit 220 to the first electronic device 101 and the second electronic device 102, the first information transmitted to the first electronic device 101 and the second electronic device 102 in response to an extended advertising packet advertised on a secondary advertising channel from the third electronic device 103.

According to an embodiment, the processor 210 may be configured to bypass or refrain from a scan of the extended advertising packet.

According to an embodiment, the processor 210 may be configured to request the second information through the communication circuit 220 to the fourth electronic device 104. According to an embodiment, the processor 210 may be configured to receive the second information through the communication circuit 220 from the second electronic device 102.

According to an embodiment, the processor 210 may be configured to request the second information through the communication circuit 220 to the second electronic device 102.

According to an embodiment, the processor 210 may be configured to transmit, through the communication circuit 220 to the second electronic device 102, a first signal for inquiring whether the second electronic device 102 is synchronized to the BIS, in response to the identifying. According to an embodiment, the processor 210 may be configured to receive, through the communication circuit 220, a second signal that indicates that the second electronic device 102 is synchronized to the BIS and is transmitted from the second electronic device in response to the signal. According to an embodiment, the processor 210 may be configured to request the second information in response to the second signal.

According to an embodiment, the second information may be at least partially different from the first information.

According to an embodiment, the second information may further indicate a hopping sequence of the second periodic advertisement intervals.

According to an embodiment, the second information may further indicate an access address for synchronizing to the BIS.

According to an embodiment, the processor 210 may be configured to execute a repeated attempt of synchronization to the BIS based on the first information, in response to the identifying. According to an embodiment, the processor 210 may be configured to request the second information, in response to a failure of the repeated attempt executed based on the first information.

According to an embodiment, the first electronic device 101 may be paired with the second electronic device 102 through a Bluetooth basic rate (BR) or a Bluetooth enhanced data rate (EDR).

According to an embodiment, the processor 210 may be configured to synchronize to the BIS by receiving through the communication circuit 220 advertising packets that are advertised during the second periodic advertisement intervals from the third electronic device 103 and include information regarding a broadcast isochronous group (BIG) including multiple instances for the BIS.

According to an embodiment, the processor 210 may be configured to request, before information regarding a user input indicating to attempt synchronizing to the BIS again is received through the communication circuit 220 from a fourth electronic device 104 connected to the first electronic device 101 and the second electronic device 102, the second information.

As described above, a first electronic device 101 may comprise a communication circuit 220 and a processor 210. According to an embodiment, the processor 210 may be configured to receive first information for synchronizing a broadcast isochronous stream (BIS) from a third electronic device 103, through the communication circuit 220 from a second electronic device 104 connected to the first electronic device 101. According to an embodiment, the processor 210 may be configured to identify failing to synchronize to the BIS during first periodic advertisement intervals of the third electronic device 103 indicated based on the first information. According to an embodiment, the processor 210 may be configured to receive a first advertising packet advertised on a primary advertising channel from the third electronic device 103, based on the identifying. According to an embodiment, the processor 210 may be configured to receive a second advertising packet advertised on a secondary advertising channel from the third electronic device 103, based on the first advertising packet. According to an embodiment, the processor 210 may be configured to obtain second information for synchronizing to the BIS, based on the second advertising packet. According to an embodiment, the processor 210 may be configured to synchronize to the BIS during second periodic advertisement intervals of the third electronic device 103 indicated based on the second information.

According to an embodiment, the processor 210 may be configured to execute a repeated attempt of synchronization to the BIS based on the first information, in response to the identifying. According to an embodiment, the processor 210 may be configured to receive the first advertising packet and the second advertising packet in response to a failure of the repeated attempt executed based on the first information. According to an embodiment, the processor 210 may be configured to obtain the second information, based on the second advertising packet.

According to an embodiment, the processor 210 may be configured to start to receive the first advertising packet, before information regarding a user input indicating to attempt synchronizing to the BIS again is received from the second electronic device 102 through the communication circuit 220.

According to an embodiment, the processor 210 may be configured to synchronize to the BIS by receiving through the communication circuit 220 advertising packets that are broadcasted during the second periodic advertisement intervals from the third electronic device 103 and include information regarding a broadcast isochronous group (BIG) including multiple instances for the BIS.

As described above, a first electronic device 101 may comprise a communication circuit 220 and a processor 210. According to an embodiment, the processor 210 may be configured to identify failing to synchronize a broadcast isochronous stream (BIS) from a third electronic device 103 during first periodic advertisement intervals of the third electronic device 103 indicated by first information for synchronizing to the BIS. According to an embodiment, the processor 210 may be configured to request, based on the identifying, second information for synchronizing to the BIS to a second electronic device 104 that transmitted the first information and is connected to the first electronic device through the communication circuit. According to an embodiment, the processor 210 may be configured to synchronize to the BIS during second periodic advertisement intervals of the third electronic device indicated based on the second information received through the communication circuit 220 in accordance with the request.

According to an embodiment, the second information may be received from a fourth electronic device 102 paired with the first electronic device.

According to an embodiment, the processor 210 may be configured to execute a repeated attempt of synchronization to the BIS based on the first information, in response to the identifying. According to an embodiment, the processor 210 may be configured to request the second information, in response to a failure of the repeated attempt executed based on the first information.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 1240) including one or more instructions that are stored in a storage medium (e.g., internal memory 1236 or external memory 1238) that is readable by a machine (e.g., the electronic device 1201). For example, a processor (e.g., the processor 1220) of the machine (e.g., the electronic device 1201) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. A first electronic device comprising:
memory storing instructions;
a communication circuit; and
a processor,
wherein the instructions, when executed by the processor, cause the first electronic device to:
identify failing to synchronize to a broadcast isochronous stream (BIS) from a third electronic device during first periodic advertisement intervals of the third electronic device indicated based on first information for synchronizing to the BIS;
request, through the communication circuit, second information for synchronizing to the BIS, based on the identifying the failing to synchronize to the BIS; and
synchronize to the BIS during second periodic advertisement intervals of the third electronic device indicated based on the second information received through the communication circuit from a second electronic device that is paired with the first electronic device and is synchronized to the BIS.

2. The first electronic device of claim 1, wherein the instructions, when executed by the processor, further cause the first electronic device to:
receive, from a fourth electronic device connected through the communication circuit to at least one of the first electronic device or the second electronic device, the first information transmitted to the first electronic device and the second electronic device in response to an extended advertising packet advertised on a secondary advertising channel from the third electronic device.

3. The first electronic device of claim 2, wherein the instructions, when executed by the processor, further cause the first electronic device to:
bypass or refrain from a scan of the extended advertising packet.

4. The first electronic device of claim 2, wherein the instructions, when executed by the processor, cause the first electronic device to:
request the second information through the communication circuit to the fourth electronic device; and
receive the second information through the communication circuit from the second electronic device.

5. The first electronic device of claim 1, wherein the instructions, when executed by the processor, cause the first electronic device to:
request the second information through the communication circuit to the second electronic device.

6. The first electronic device of claim 1, wherein the instructions, when executed by the processor, cause the first electronic device to:
transmit, through the communication circuit to the second electronic device, a first signal for inquiring whether the second electronic device is synchronized to the BIS, in response to the identifying the failing to synchronize to the BIS;
receive, through the communication circuit, a second signal indicating that the second electronic device is synchronized to the BIS, the second signal being transmitted from the second electronic device in response to the first signal; and
request the second information in response to the second signal.

7. The first electronic device of claim 1, wherein the second information is at least partially different from the first information.

8. The first electronic device of claim 1, wherein the second information further indicates a hopping sequence of the second periodic advertisement intervals.

9. The first electronic device of claim 8, wherein the second information further indicates an access address for synchronizing to the BIS.

10. The first electronic device of claim 1, wherein the instructions, when executed by the processor, cause the first electronic device to:
execute a repeated attempt of synchronization to the BIS based on the first information, in response to the identifying the failing to synchronize to the BIS; and
request the second information, in response to a failure of the repeated attempt executed based on the first information.

11. The first electronic device of claim 1, wherein the first electronic device is paired with the second electronic device through a Bluetooth basic rate (BR) or a Bluetooth enhanced data rate (EDR).

12. The first electronic device of claim 1, wherein the instructions, when executed by the processor, cause the first electronic device to:
synchronize to the BIS by receiving through the communication circuit, advertising packets that are advertised during the second periodic advertisement intervals from the third electronic device, and
wherein the advertising packets include information regarding a broadcast isochronous group (BIG) including multiple instances for the BIS.

13. The first electronic device of claim 1, wherein the instructions, when executed by the processor, cause the first electronic device to:
before information regarding a user input indicating to attempt synchronizing to the BIS again is received, request the second information through the communication circuit from a fourth electronic device connected to the first electronic device and the second electronic device.

14. A method executed in a first electronic device with a communication circuit, the method comprising:
identifying failing to synchronize to a broadcast isochronous stream (BIS) from a third electronic device during first periodic advertisement intervals of the third electronic device indicated based on first information for synchronizing to the BIS;
requesting, through the communication circuit, second information for synchronizing to the BIS, based on the identifying the failing to synchronize to the BIS; and
synchronizing to the BIS during second periodic advertisement intervals of the third electronic device indicated based on the second information received through the communication circuit from a second electronic device that is paired with the first electronic device and is synchronized to the BIS.

15. The method of claim 14, further comprising:
receiving, from a fourth electronic device connected through the communication circuit to at least one of the first electronic device or the second electronic device, the first information transmitted to the first electronic device and the second electronic device in response to an extended advertising packet advertised on a secondary advertising channel from the third electronic device.
